(19) Europäisches Patentamt
European Patent Office
Office européen des brevets

(11) **EP 0 614 319 B1**

(12) **EUROPÄISCHE PATENTSCHRIFT**

(45) Veröffentlichungstag und Bekanntmachung des Hinweises auf die Patenterteilung:
**16.04.1997   Patentblatt 1997/16**

(51) Int Cl.⁶: **H04N 9/31**, H04N 9/67

(21) Anmeldenummer: **93121128.8**

(22) Anmeldetag: **30.12.1993**

(54) **Fernsehprojektionssystem**

Television projection system

Système de projection de télévision

(84) Benannte Vertragsstaaten:
**AT BE CH DE DK ES FR GB GR IE IT LI LU NL PT SE**

(30) Priorität: **04.03.1993   DE 4306797**

(43) Veröffentlichungstag der Anmeldung:
**07.09.1994   Patentblatt 1994/36**

(73) Patentinhaber: **LDT GmbH & Co.**
**Laser-Display-Technologie KG**
**07552 Gera (DE)**

(72) Erfinder:
• **Deter, Christhard**
**D-07546 Gera (DE)**

• **Löffler, Dirk**
**D-07554 Brahmenau (DE)**

(74) Vertreter: **Geyer, Werner, Dr.-Ing. et al**
**Patentanwälte**
**GEYER & FEHNERS**
**Perhamerstrasse 31**
**80687 München (DE)**

(56) Entgegenhaltungen:
**WO-A-88/01823          US-A- 3 689 689**
**US-A- 4 987 483**

## Beschreibung

Die Erfindung betrifft ein Verfahren zur Erzeugung von farbigen Bildpunkten eines Fernsehbildes, die mit Lichtsignalen unterschiedlicher Wellenlänge beleuchtet werden und deren Farbtöne durch Farbwertsignale in einem ersten Basissystem festgelegt sind, das durch über Wellenlängen von Bildschirmphosphoren definierte Eckpunkte eines Farbtonbereichs in einem CIE-Diagramm darstellbar ist, wobei durch die Wellenlängen der Lichtsignale ein vom ersten verschiedenes, zweites Basissystem aufgespannt wird, das einen mit dem ersten Basissystem gemeinsamen Farbtonbereich aufweist und Lichtsignale aus mindestens drei Signalen erzeugt werden, welche die Farbwertsignale sind oder diese enthalten, indem über eine Matrix vom ersten Basissystem in das zweite transformiert wird. Weiter betrifft die Erfindung ein Fernsehprojektionssystem zur Erzeugung von farbigen Bildpunkten eines Fernsehbildes mit mindestens drei intensitätsmäßig steuerbaren Lichtquellen für Lichtsignale unterschiedlicher Wellenlänge, wobei der Farbton jedes Bildpunktes durch Farbwertsignale in einem ersten Basissystem festgelegt ist, das durch über Wellenlängen von Bildschirmphosphoren definierte Eckpunkte eines Farbtonbereichs in einem CIE-Diagramm darstellbar ist, und die Wellenlängen der Lichtsignale ein vom ersten verschiedenes, zweites Basissystem bestimmen, das einen mit dem ersten Basissystem gemeinsamen Farbtonbereich aufweist, mit einer Eingangsschaltung zur Erzeugung mindestens dreier elektrischer Signale, die den Farbwertsignalen proportional sind oder diese in einer Mischung enthalten, und ferner mit einer Steuereinrichtung zur Steuerung der Lichtquellen, die von den Signalen der Eingangsschaltung ansteuerbar ist, wobei die Steuereinrichtung eine Schaltung aufweist, mit der jeder Farbton vom ersten auf das zweite Basissystem über eine Matrix transformierbar ist, insbesondere zur Durchführung des eingangs genannten Verfahrens.

Ein Fernsehprojektionssystem das ein solches Verfahren einsetzt, wurde in den "Proceedings of 6th International Quantum Electronics Conference", 1970, von Yahiko YAMADA, Manabu YAMAMOTO und Sadao NOMURA unter dem Titel "Large Screen Laser Color TV Projector" beschrieben. Als Lichtquellen werden dabei drei verschiedenfarbige Laser verwendet, die mit Hilfe von DKDP-Kristallen moduliert und mit einem System von dichroitischen Spiegeln zu einem gemeinsamen Lichtstrahl vereinigt werden. Dieser wird über eine Ablenkeinrichtung auf einen Schirm projiziert.

Die Ablenkeinrichtung rastert dabei den Lichtstrahl in Übereinstimmung mit der Bild- und Zeilenfrequenz so, daß auf einem Schirm ein farbiges Fernsehbild abgebildet wird.

Bei einem derart projizierten Bild besteht jedoch ein wesentlicher Unterschied zu Farbbildern, wie sie von der Fernsehröhre eines üblichen Farbfernsehempfängers her bekannt sind. Denn Farbfernsehröhren erzeugen die Farben durch Bildschirmphosphore, die ein relativ breites Farbspektrum aussenden, während Laser Quellen für monochromatisches Licht darstellen. Die Fernsehkameras sind zur farbrichtigen Wiedergabe beim üblichen Fernsehen in ihrer Farbempfindlichkeit auf die Bildschirmphosphore abgestimmt, was jedoch bei Projektionen mit einem Lasersystem zu deutlichen Farbtonverfälschungen führt. Wesentliche Farbtonverfälschungen ergeben sich auch dadurch, daß Laserlichtquellen nicht für alle wünschenswerten Wellenlängen zur Verfügung stehen, so daß selbst bei sorgfältiger Auswahl von Lasern nicht alle gewünschten Farbtöne erzeugbar sind.

In dem genannten Artikel von YAMADA et al. wird ein Fernsehprojektionssystem beschrieben, bei dem ein Videobild mit Hilfe von drei Lasern mit den Wellenlängen 488 nm, 514 nm und 647 nm erzeugt wird. Die Farben der Laser stimmen also nicht mit den Farben des NTSC-Videosignals überein, weshalb die Autoren dort vorschlagen, mit Hilfe eines Matrixschaltkreises die durch die Laser erreichbaren Farbtöne für die über die NTSC-Norm gesendeten Farbtöne zu korrigieren. Allerdings wird ausdrücklich darauf hingewiesen, daß dabei eine Farbtonkorrektur nur in beschränktem Ausmaß möglich ist.

In dem Buch "Farbmetrik und Farbfernsehen" von H. LANG, R. Oldenbourg Verlag, München/Wien 1978, wird dargestellt, daß mit Hilfe von Matrixoperationen Farbtöne von einem Basissystem auf ein anderes Basissystem transformierbar sind. Als Voraussetzungen, bei denen eine derartige Transformation möglich sein soll, werden im wesentlichen die Existenz von Basissystemen und Komponenten für Farbtöne und ihre Darstellbarkeit als Vektoren in Koordinaten x, y und z genannt. Allerdings wird darauf hingewiesen, daß Schwierigkeiten bei Spektralfarben auftreten können, bei denen einige Komponenten im Vektorraum negativ sind, negative Farbkomponenten jedoch physikalisch nicht realisierbar sind. Deshalb soll bei Auftreten negativer Komponenten der Farbtonvektor nicht selbst transformiert werden, sondern ein anderer, der um einen zusätzlichen positiven Vektor ergänzt ist.

Bei der weiteren Entwicklung von Fernsehprojektionssystemen wurde die Farbtontransformation auch nicht mehr verwendet. So schildern Teiichi TANEDA et al. in "High Quality Laser Color Television Display", NHK Laboratories Note (1972), Seriennummer 152, ein Laserprojektionssystem, das Wellenlängen von 477 nm, 515 nm und 633 nm einsetzt, die also bis auf Grün in der Nähe der Farben nach der NTSC-Norm liegen. Auf eine Farbtransformation wird trotz Abweichungen der erzeugten Farbtöne von den NTSC-Farben verzichtet.

Wenig später (1973) beschreiben dieselben Autoren dieses System in "Journal of the SMPTE", Vol. 82, S. 470 noch einmal, ohne daß dabei jedoch Fortschritte in der Farbanpassung erkennbar werden.

Auch bei späteren Entwicklungen von Großbildprojektionsgeräten, wie sie z.B. aus der WO A-88/01823, aus "Development of a Large Screen High Definition Laser Video Projection System", Tony CLINIC, SPIE Vol. 1456, "Large-Screen-Projection", Avionic and Helmet Mounted Displays, 1991, S. 51 bis 57, und aus "Laser-Based Display Technology Development at the Navel Ocean Systems Center (NOSC)", Thomas PHILLIPS et al, SPIE Vol. 1454, Beam Deflection and Scanning Technologies, 1991, S. 290 bis 298, entnehmbar sind, wird keinerlei Gebrauch von Farbtransformationen gemacht. Vielmehr lief die Entwicklung dahin, die Farben der Lichtquellen möglichst so zu wählen, daß sie die Farben der Bildschirmphosphore möglichst gut wiedergegeben.

Für eine möglichst gute Farbangleichung der Laserfarben an die Farben der Bildschirmphosphore kann man Farbstofflaser verwenden, mit denen sich die Wellenlängen des erzeugten Laserlichts verschieben lassen und deren Farbton gleich denen der Bildschirmphosphore ist. Farbstofflaser haben jedoch nur einen sehr geringen Wirkungsgrad, so daß bei dieser Technik die Laser-Leistung stark reduziert ist. Die Zurverfügungstellung einer höheren Leistung würde das System außerordentlich aufwendig machen, wobei wesentlich größere Leistungen kaum mehr mit einem vernünftigen Aufwand realisierbar wären (vgl. "Fernseh- und Kinotechnik", 1974, Nr. 6, S. 169). Ein weiterer Nachteil der Farbstofflaser besteht auch darin, daß die laseraktiven Substanzen toxisch sind, was große Probleme für die Entsorgung aufwirft, vor allem, da die Lebensdauer handelsüblicher Farbstofflaser sehr begrenzt ist. Trotzdem wurden Farbstofflaser zur Farbverschiebung bei Laserprojektionssystemen eingesetzt (z.B. EP-A-0 084 434).

Die Auswahl der Laserwellenlängen in der weiter oben erwähnten Artikel von Tony CLINIC erfolgt ebenfalls durch Farbstofflaser, wobei sich für Rot eine Wellenlänge zwischen 600 und 620 nm, für Grün eine solche von 514,5 nm und für Blau eine Wellenlänge zwischen 457 und 488 nm ergibt. Zur Farbtonangleichung an die Bildschirmphosphore wird ein Schaltkreis verwendet, bei dem die Steuersignale für Rot, Grün und Blau über eine Gammakorrektur transformiert werden, um einen akzeptablen Farbtonbereich für HDTV zu erzielen. Wie jedoch eine Gammakorrektur, die im wesentlichen nichtlinear ist, eine verbesserte Farbtonwiedergabe ermöglichen soll, bleibt dabei nicht ganz verständlich, weshalb anzunehmen ist, daß auch die Farbtöne, die mit diesem System erreicht werden können, keine naturgetreuen Farben wiedergeben.

In dem Buch "Die Einführung des hochauflösenden Fernsehens" von A. FELSENBERG, Verlag Gerhard Spiehs, Kottgeisering, Oktober 1990, wird gefordert (S. 26), daß die Farbwiedergabe für HDTV wesentlich verbessert werden muß. Hierzu werden mehrere Vorschläge untersucht, darunter auch ein Vorschlag zur Verwendung imaginärer Primärvalenzen, die auf reale Farben im Empfänger zurückgerechnet werden. Dieser Vorschlag, nämlich über Matrixtransformationen bessere Farbtöne zu erreichen, wird dann aber wieder verworfen, da eine Qualitätsbeeinträchtigung aufgrund von Störungen zu befürchten sei.

Ausgehend hiervon liegt der Erfindung die Aufgabe zugrunde, ein gattungsgemäßes Verfahren so weiterzuentwickeln, daß es eine für den Betrachter des Fernsehbildes noch bessere Farbtonwiedergabe der im ersten Basissystem festgelegten Farbtöne gestattet. Ferner soll ein zur Durchführung dieses Verfahrens besonders geeignetes Fernsehprojektionssystem zur Verfügung gestellt werden.

Bei einem Verfahren der eingangs genannten Art wird diese Aufgabe erfindungsgemäßen dadurch gelöst, daß die Wellenlängen der Lichtsignale so festgelegt werden, daß die kürzeste 470 nm oder kleiner ist und der gemeinsame Farbtonbereich mindestens diejenigen Eckpunkte des Farbtonbereichs des ersten Basissystems enthält, deren Wellenlänge größer als die kürzeste durch Bildschirmphosphore bestimmte Wellenlänge ist, und daß jeder durch die Matrixtransformation erzeugte Farbton innerhalb des gemeinsamen Farbtonbereichs im zweiten Basissystem gleich dem durch die Farbwertsignale im ersten Basissystem festgelegten Farbton ist.

Beim erfindungsgemäßen Verfahren werden somit die Wellenlängen der Lichtsignale so ausgewählt, daß die Primärvalenzen den gesamten Farbtonbereich erfassen, der bei Rot, Grün und Hellblau bis Blau und deren Mischungen gegeben ist. Abweichungen werden dabei nur in dunkelblauen Bereichen des CIE-Diagramms bei Wellenlängen unterhalb von 470 nm zugelassen, wobei jedoch gerade hier die scheidungsfähigkeit des menschlichen Auges nicht sehr gut ist: so ist aus der täglichen Erfahrung bekannt, daß ein sehr dunkles Blau vom menschlichen Auge im Farbton nur wenig von einem anderen dunklen Blau unterschieden und oft sogar für Schwarz gehalten wird.

Der dunkelblaue Bereich, in dem man auf eine exakte Farbtransformation am ehesten verzichten kann, läßt sich aus den von der Internationale Beleuchtungskommission bestimmten spektralen Helligkeitsempfindlichkeitskurven (CIE 1924, CIE 1951) entnehmen. Die spektralen Helligkeitsempfindlichkeitskurven verlaufen angenähert gaußisch mit einer halben Gaußbreite von 40 nm. Für das Nachtsehen liegt das Maximum der Kurve ungefähr bei 510 nm und für das Tagsehen bei 560 nm. Ein Betrachter erfaßt also Farben von Nachtbildern nur gut im Bereich von 510 ± 40 nm. Da bei der Erfindung jedoch alle Wellenlängen größer als 470 nm für die Darstellung der Videobilder eingesetzt werden, ist beim erfindungsgemäßen Verfahren eine durch Vernachlässigung von kleineren Wellenlängen auftretende Farbtonänderung selbst bei sehr dunklen Bildern vom Auge kaum mehr erkennbar. Beim Tagsehen, was den Fall der meisten Videobilder betrifft, werden Wellenlängen kleiner als 470 nm vom Auge sogar nur mit einer Empfindlichkeit geringer als 10% wahrgenommen, so daß selbst beim völligen Abschneiden des Farbtonbereichs für Wellenlängen kleiner als 470 nm bei der Erfindung eine Fehldarstellung der Farbtöne vom Auge des Betrachters praktisch nicht mehr erkannt wird.

Im Gegensatz zum genannten Stand der Technik, bei dem der grüne Bereich durch die verwendeten Laserwellenlängen nicht erfaßt wird, obwohl das Auge bei Grün besonders empfindlich ist, wird bei der Erfindung gerade dort eine vollständige Farbanpassung sichergestellt. Insgesamt wird beim erfindungsgemäßen Verfahren eine ganz besonders günstige Auswahl der Wellenlängen der Lichtsignale vorgenommen, die zu einer für das Auge des Betrachters so gut wie optimalen Farbanpassung führt.

Das erfindungsgemäße Verfahren verwendet eine Farbtransformation, bei der die Farbtöne über die Matrix in einem gemeinsamen Farbtonbereich genau transformiert werden. Der entsprechende Formalismus ist aus der Publikation von Lang bekannt, auch wenn aus dieser nicht hervorgeht, wie die Primärvalenzen zu wählen sind, da der mathematische Formalismus keine Rücksicht darauf nehmen muß, ob negative Lichtintensitäten bei der Transformation eine Rolle spielen.

Bei der Erfindung werden die Farbwertsignale R (Rot), G (Grün) und B (Blau) mit Hilfe einer Matrixtransformation so umgewandelt und die Lichtsignale so gesteuert, daß sie, bis auf einen durch die kürzeste Wellenlänge der Primärvalenzen gegebenen Dunkelblautonbereich, den richtigen Farbton wiedergeben. Dadurch, daß eine einfache Matrixtransformation eingesetzt wird, kann beim erfindungsgemäßen Verfahren auf teuere und kostspielige Farbstofflaser zur Erzeugung der gleichen Farbtöne wie die der Bildschirmphosphore verzichtet werden. Die zur Erzeugung der Lichtstrahlen verwendeten Lichtquellen können somit direkt eingesetzt werden, so daß kein Leistungsverlust berücksichtigt werden muß. Schaltkreise für eine derartige Matrixtransformation sind auch wesentlich zuverlässiger und einfacher zu warten als Farbstofflaser und die Entsorgung defekter Bauelemente stellt nur ein geringes Problem dar.

Obgleich in der Publikation "HDTV - Ein neues Medium", interdisziplinäre Tagung an der Universität Konstanz 1990 (S. 30), prognostiziert wird, daß großbildfähige Endgeräte mit guter Farb- und Bildwiedergabe erst nach dem Jahre 2000 erwartet werden können, können überraschenderweise mit dem erfindungsgemäßen Verfahren solche Geräte mit hoher Farbtreue schon heute gebaut werden.

In einer vorteilhaften Weiterbildung der Erfindung werden für aus der Matrixtransformation sich ergebende negative Intensitäten bei Farbsignalen von Farbtönen außerhalb des gemeinsamen Farbtonbereichs Lichtsignale mit einer Intensität erzeugt, die aus der jeweiligen negativen Intensität über eine logarithmisch asymptotisch auf Null gehende Funktion gewonnen wird.

Die Erfindung betrifft auch ein Fernsehprojektionssystem der eingangs genannten Art, insbesondere zur Durchführung des erfindungsgemäßen Verfahrens, das dadurch gekennzeichnet ist, daß die kürzeste Wellenlänge der Lichtquellen 470 nm oder kleiner ist und die anderen Wellenlängen der Lichtquellen so festgelegt werden, daß der gemeinsame Farbtonbereich mindestens diejenigen Eckpunkte des Farbtonbereiches des ersten Basissystems enthält, deren Wellenlänge größer als die kürzeste durch Bildschirmphosphore bestimmte Wellenlänge ist. Dabei soll die Schaltung zur Transformation jedes Farbtons vom ersten auf das zweite Basissystem so ausgelegt sein, daß der Farbton eines Bildpunktes innerhalb des gemeinsamen Farbtonbereiches gleich dem durch die Farbwertsignale festgelegten Farbton ist.

Das erfindungsgemäße Fernsehprojektionssystem ermöglicht in günstiger Weise die Durchführung des erfindungsgemäßen Verfahrens, wobei eine Steuereinrichtung eingesetzt wird, in die die Signale der Eingangsstufe eingegeben und mit einer Matrixschaltung so aufbereitet werden, daß die Farbtöne bis auf einen Dunkelfarbtonbereich naturgetreu dargestellt werden.

Dabei können die Eingangssignale für die Schaltung die Farbwertsignale R, G, B sein, die über Matrizen in erforderliche Farbwertsignale R', G', B' zum Ansteuern der Lichtquellen transformiert werden. Das hat den Vorteil, daß der Eingangskreis aus handelsüblichen Komponenten ausgebildet werden kann und die Farbanpassung nur durch eine zusätzliche, einfach aufgebaute, die Signale linear transformierende Schaltung durchgeführt werden kann.

Allerdings werden in der Farbfernsehtechnik bei den heute gebräuchlichen Normen PAL, NTSC und SECAM nicht die Farbwerte der Sendeseite direkt übertragen, sondern lineare Kombinationen von diesen, die im Empfangsgerät durch eine andere Schaltung, deren Ausgangssignale als Matrixmultiplikation mit den Einzelgangsignalen darstellbar sind, in Farbwertsignale umgewandelt werden. Ein Farbfernsehprojektionssystem für die Transformation von Linearkombinationen der R, G, B-Signale in R', G', B'-Signale muß also zwei Schaltungen für Transformationen entsprechend einer Matrixmultiplikation vorsehen.

Dieser Aufwand wird verringert, wenn die Matrixmultiplikation der Schaltung entsprechend den Koeffizienten der Matrix zur Erzeugung der R, G, B-Signale und der Umwandlung der R, G, B-Signale in die R', G', B'-Signale enthält, so daß gemäß einer vorzugsweisen Weiterbildung die elektrischen Signale der Eingangsschaltung ein der Summe der drei Farbwertsignale proportionales Luminanzsignal und zwei verschiedene, Farbdifferenzsignalen proportionale Signale umfassen. Dadurch liegen am Eingang der Steuereinrichtung das Luminanzsignal Y und die gesendeten Farbdifferenzsignale U, V bzw. I, Q direkt an, aus denen die Signale zur Ansteuerung der Lichtquellen gewonnen werden.

Besonders einfach läßt sich eine Schaltung der obengenannten Art gemäß einer vorteilhaften Weiterbildung der Erfindung dadurch verwirklichen, daß sie ein die Matrixtransformation bestimmendes Netzwerk aus Widerständen enthält. Ein Widerstandsnetzwerk hat den Vorteil, daß es sehr kostengünstig ist, besonders wenn nur positive Matrixelemente verwirklicht werden müssen. Dann benötigt es auch keine zusätzliche Versorgungsspannung und frequenzabhängigen Fehlern braucht keine besondere Beachtung geschenkt werden.

Bei einer anderen bevorzugten Weiterbildung der Erfindung ist für die Schaltung in der Steuereinrichtung für jedes ihrer Ausgangssignale ein Operationsverstärker vorgesehen, mit dem aus elektrischen Signalen erzeugte, durch über die Koeffizienten der Matrix bestimmte Eingangswiderstände fließende Ströme summierbar sind. Bei der Summierung über Operationsverstärker ist der schaltungsmäßige Aufwand zwar größer als bei einem reinen Widerstandsnetzwerk, jedoch werden unerwünschte Kopplungen zwischen den Eingangssignalen vermieden. Heute sind Operationsverstärker auch so kostengünstig verfügbar, so daß der zusätzliche Schaltungsaufwand gegenüber dem Vorteil, die Eingangssignale der Schaltung voneinander entkopppeln zu können, nicht ins Gewicht fällt.

In Abhängigkeit davon, ob als Eingangssignale für die Einrichtung die Farbwertsignale oder das Luminanzsignal zusammen mit den Farbdifferenzsignalen U, V (PAL-Norm) oder auch I, Q (NTSC, SECAM) verwendet werden, können sich die Matrix und damit die Widerstände ändern. Eine andere Matrix bzw. andere Widerstände würden sich auch ergeben, wenn man andere Lichtquellen, insbesondere Laser anderer Wellenlängen, einsetzt. Deshalb sieht eine bevorzugte Weiterbildung der Erfindung vor, die Eingangswiderstände der Operationsverstärker oder das vorgenannte Netzwerk in einer Baugruppe anzuordnen, die austauschbar, z.B. durch Steckkontakte, mit der übrigen Schaltung des Fernsehprojektionssystems zusammengeschaltet ist. Da es sich dabei allgemein um wenige Widerstände (in dem angesprochenen Beispiel drei Eingangssignale und drei Ausgangssignale, somit insgesamt neun Widerstände) handelt, lassen sich diese vorzugsweise in einer einfachen integrierten Schaltung anordnen. Da es sich bei der integrierten Schaltung nur um Widerstände handelt, wird der integrierte Schaltkreis vorzugsweise als Dickfilmschaltkreis ausgebildet. wodurch genaue Widerstandswerte selbst bei kleinen Stückzahlen kostengünstig realisierbar sind.

Für die Erfindung lassen sich allgemein Lichtquellen einsetzen, die sich leicht auf einen Schirm fokussieren lassen und deren Lichtintensität sich mit Frequenzen im Megahertzbereich leicht genug ändern läßt. Die optisch am wenigsten aufwendige, verwendbare Lichtquelle ist nach dem Stand der Technik der Laser. Bezüglich Leistung und Aufwand bieten sich da bevorzugt Edelgaslaser, wie z.B. Argonmischgaslaser oder Kryptonmischgaslaser, an. Diese werden statisch betrieben und die hochfrequente Modulation der Lichtintensität läßt sich mit gesonderten Lichtmodulatoren durchführen. Der Aufwand zusätzlicher Lichtmodulatoren ist aber vermeidbar, wenn man gemäß einer vorzugsweisen Weiterbildung der Erfindung als Lichtquellen Halbleiterlaser oder LED's einsetzt, da diese schnell genug für eine direkte elektrische Ansteuerung sind.

Die Erfindung wird nachfolgend anhand der Figuren im Prinzip beispielhalber noch näher erläutert. Es zeigen:

Fig. 1 eine schematische Darstellung eines erfindungsgemäßen Fernsehprojektionssystems;

Fig. 2 ein CIE-Diagramm mit verschiedenen Farbdreiecken und

Fig. 3 eine Schaltung einer Einrichtung, wie sie bei einem erfindungsgemäßen Fernsehprojektionssystem verwendet werden kann.

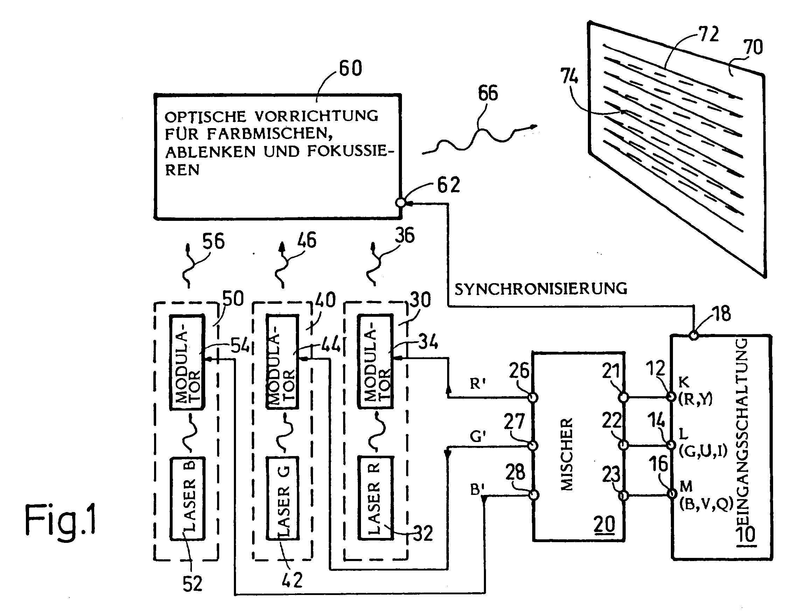

Bei dem in Fig. 1 gezeigten Farbfernsehprojektionssystem werden in einem Eingangskreis 10, der z.B. einen Tuner zum Fernsehempfang und Schaltungen zur Dekodierung von Farbsignalen bzw. Farbträgersignalen aufweist, drei Signale K, L, M an Ausgängen 12, 14, 16 erzeugt. Diese Signale sind gemäß dem eingangs angegebenen Stand der Technik die Farbwertsignale R, G, B, wie sie üblicherweise zur Intensitätssteuerung für die drei Farben an die Fernsehröhre abgegeben werden.

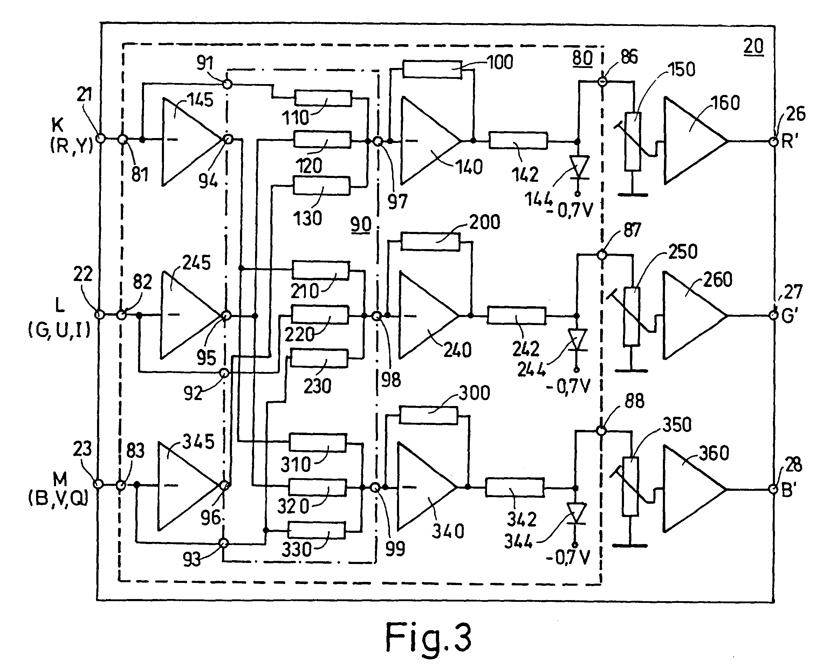

Die Ausgänge 12, 14, 16 sind mit den Eingängen 21, 22, 23 einer als Mischer wirkenden Steuereinrichtung 20 verbunden, die aus den Eingangssignalen K, L, M Ausgangssignale R', G', B' erzeugt, die an ihren Ausgängen 26, 27 und 28 anliegen. Wie die Ausgangssignale R', G', B' aus den Eingängen K, L, M gebildet werden, wird in Zusammenhang mit Fig. 3 später ausführlich beschrieben.

Die Ausgangssignale R', G', B', an den Ausgängen 26, 27, 28 der Steuereinrichtung 20 steuern die Intensität von Lichtstrahlen 36, 46, 56 aus Lichtquellen 30, 40, 50. Im Ausführungsbeispiel enthalten die Lichtquellen 30, 40, 50 Laser 32, 42, 52, die im Dauerbetrieb arbeiten. Das von ihnen erzeugte Laserlicht wird durch Modulatoren 34, 44, 45 in seiner Intensität durch die elektrischen Signale R', G' B' verändert. Zur Modulation eignen sich insbesondere DKDP-Kristalle, wie dies aus dem Stand der Technik bekannt ist.

Die drei Laserstrahlen 36, 46, 56 werden dann einer optischen Vorrichtung 60 zugeführt, die mehrere Aufgaben erfüllt. Die erste Aufgabe besteht darin, die drei getrennten Laserstrahlen 36, 46, 56 zu einem gemeinsamen Laserstrahl zusammenzuführen. Dies geschieht mit dichroitischen Spiegeln in bekannter Weise. Weiter enthält die optische Vorrichtung 60 eine Ablenkeinrichtung zum Rastern eines Fernsehbildes. Die Ablenkeinrichtung rastert den Gesamtlaserstrahl zeilenmäßig, wie dies auch von der Bildröhre bekannt ist. Der gerastete Laserstrahl 66 wird auf einem Schirm 70 aufgefangen, wobei am Auftreffort jeweils ein Bildpunkt 74 abgebildet wird. In Fig. 1 ist auf dem Schirm 70 durch die dünneren Linien angedeutet, wie das Fernsehbild gerastert wird.

Zusätzlich zu den genannten Funktionen können in der optischen Vorrichtung 60 auch zusätzliche Fokussierungseinrichtungen enthalten sein, um die Bildqualität zu verbessern.

Die Ablenkeinrichtung in der optischen Vorrichtung 60 besteht beispielsweise aus sich schnell drehenden Spiegeln, die über eine Synchronisierungsleitung von einem Ausgang 18 der Eingangsschaltung 10 über den Eingang 62 der optischen Vorrichtung 60 ein Synchronisationssignal empfangen, damit die Rasterung durch die Spiegel entsprechend dem Videosignal synchronisiert ist.

Das Bild entsteht auf dem Schirm 70 in bekannter Weise, indem der Laserstrahl 66 entsprechend der Abtastung im Sender über den Schirm 70 gerastert wird. Dabei ist der Farbton eines Bildpunktes 74 durch die Kombination der Intensitäten der Laserstrahlen 36, 46 und 56 gegeben. Da die im Ausführungsbeispiel verwendeten Laser, beispielsweise Edelgasmischlaser mit nachgeschalteten Farbstofflasern, mit den Wellenlängen für Blau 470 nm, Grün 545 nm und Rot 620 nm, unterschiedlich zu den Wellenlängen der üblicherweise beim Fernsehen eingesetzten Phosphore emittieren, entstünde bei einem direkten Anschluß der im Eingangskreis erzeugbaren RGB Signale an die Modulatoren für die Laser mit Farbe Rot, Grün und Blau eine Farbverfälschung. Dieser Farbverfälschung wird mit Hilfe der Steuereinrichtung 20 abgeholfen, die neue Signale R', G', B' erzeugt, bei denen dieser Farbfehler korrigiert ist.

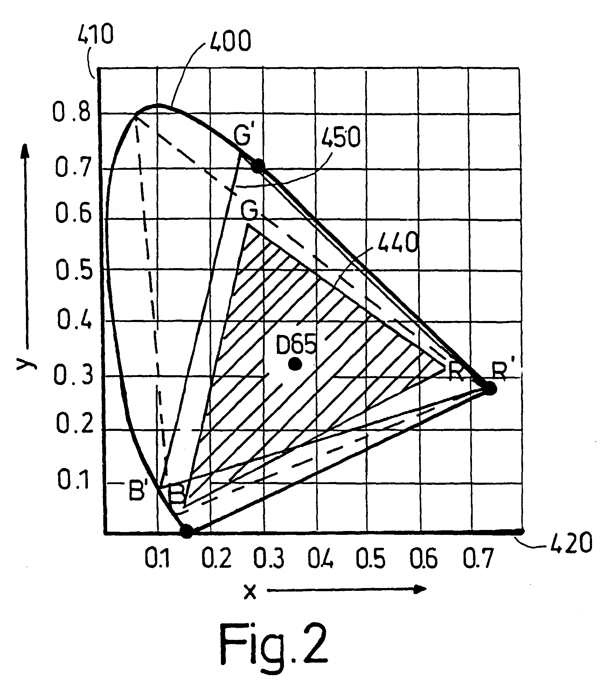

Farbtöne lassen sich in einem CIE-Vektorraum, dessen Projektion auf die x,y-Achse als CIE-Diagramm in Fig. 2 gezeigt ist, als Vektoren darstellen. Eine Transformation der Farbwertsignale R, G, B von einem zugehörigen ersten Basissystem zu den erfindungsgemäß zu verwendenden Signalen R', G', B' in einem zugehörigen zweiten Basissystem läßt sich deshalb als Drehung und Streckung in einem Vektorraum darstellen und mathematisch als Matrixmultiplikation ausdrücken. Wenn mit R, G, B im folgenden die Eingangssignalwerte und mit R', G', B' die Ausgangssignalwerte der Steuereinrichtung 20 bezeichnet werden, so gilt für die Matrixmultiplikation, wenn die Koeffizienten $a_{ij}$ die Matrixelemente einer Transformationsmatrix a bezeichnen:

$$R' = a_{11} R + a_{12} G + a_{13} B$$

$$G' = a_{21} R + a_{22} G + a_{23} B$$

$$B' = a_{31} R + a_{32} G + a_{33} B$$

oder:

$$\begin{pmatrix} R' \\ G' \\ B' \end{pmatrix} = a \begin{pmatrix} R \\ G \\ B \end{pmatrix}$$

Matrixwerte zur Transformation von R, G, B Signalen für die Laserwellenlängen 620 nm, 545 nm und 470 nm, sind in der nachfolgenden Tabelle 1a aufgeführt.

Tabelle 1a:

| | | |
|---|---|---|
| $a_{11} = 1{,}24$; | $a_{12} = -0{,}15$; | $a_{13} = -0{,}09$ |
| $a_{21} = -0{,}09$; | $a_{22} = 1{,}05$; | $a_{23} = 0{,}03$ |
| $a_{31} = -0{,}02$; | $a_{32} = -0{,}14$; | $a_{33} = 1{,}16$ |

Bei einem anderen Ausführungsbeispiel werden Laserlichtquellen mit den Wellenlängen 647,1 nm für Rot, 514,5 nm für Grün und 458,0 nm für Blau eingesetzt. Die entsprechenden Koeffizienten der Matrix ergeben sich dann wie folgt (Tabelle 1b):

Tabelle 1b:

| | | |
|---|---|---|
| $a_{11} = 0{,}5677$; | $a_{12} = 0{,}416$; | $a_{13} = 0{,}0144$; |
| $a_{21} = 0{,}0868$; | $a_{22} = 0{,}8597$; | $a_{23} = 0{,}0543$; |
| $a_{31} = 0{,}0091$; | $a_{32} = 0{,}016$; | $a_{33} = 0{,}9753$. |

Die schaltungstechnische Verwirklichung dieser Transformationen vom R, G, B System zum R', G', B' System wird weiter unten noch in Verbindung mit Fig. 3 im einzelnen dargestellt.

Im beschriebenen Beispiel wurden die Signale K, L, M durch die Farbwertsignale R, G, B dargestellt. Es ist aber auch möglich, statt der Signale R, G, B an den Eingängen 21, 22 und 23 das Luminanzsignal Y und die Farbdifferenzsignale U und V bzw. I und Q direkt in die Farbsignale R', G', B' umzuwandeln. Dies soll hier am Beispiel des PAL-Systems erläutert werden. Analoge Betrachtungen können gleichermaßen für das NTSC- und das SECAM-System durchgeführt werden.

Beim PAL-System werden die R, G, B Signale aufgrund der folgenden Matrixmultiplikation erzeugt:

$$
\begin{pmatrix} R \\ G \\ B \end{pmatrix} = \begin{pmatrix} 1; & 0 & ; & 1 \\ 1; & -L_B/L_G; & -L_R/L_G \\ 1; & 1 & ; & 0 \end{pmatrix} \begin{pmatrix} Y \\ U \\ V \end{pmatrix}
$$

Dabei sind $L_R$; $L_G$; und $L_B$ die Leuchtdichtebeiwerte mit denen das Luminanzsignal Y durch die Farbwertsignale R, G, B als $Y = L_R \cdot R + L_G \cdot G + L_B \cdot B$ mit $L_R + L_G + L_B = 1$ ausgedrückt wird.

Es gilt also:

$$
\begin{pmatrix} R \\ G \\ B \end{pmatrix} = b \begin{pmatrix} Y \\ U \\ V \end{pmatrix}
$$

worin b wiederum eine Transformationsmatrix darstellt.

Aus dem übertragenen Lumineszenzsignal Y und den Farbdifferenzsignalen U und V werden also die R, G, B-Signale mit einer ähnlichen Matrixmultiplikation, wie sie auch bei der Erzeugung der Signale R', B', G' aus den Signalen R, G, B verwendet wird, gewonnen. Die angegebenen Gleichungen erlauben nun die Beziehung:

$$
\begin{pmatrix} R' \\ G' \\ B' \end{pmatrix} = (a \cdot b) \begin{pmatrix} Y \\ U \\ V \end{pmatrix}
$$

Diese Gleichung zeigt, daß anstelle von zwei Schaltkreisen, wie im diskutierten Beispiel gemäß Fig. 1, zur Erzeugung einer durch eine Matrixmultiplikation darstellbaren Signaltransformation, auch eine einzige Matrixmultiplikation möglich ist, wobei aber dann die Koeffizienten der zu verwendenden Matrix dem Produkt a·b entnommen werden müssen. Wenn die Koeffizienten der Matrix in der Steuereinrichtung 20 entsprechend der Matrix a · b festgelegt werden, ist es möglich, die Einrichtung auch direkt an die Signale Y, U, V des Eingangskreises anzukoppeln bzw. beim NTSC- oder SECAM-System an die Signale Y, I und Q. Dadurch läßt sich der Schaltungsaufwand für ein Fernsehprojektionssystem verringern.

Aus Fig. 2 ist eine weitere Problematik der Fernsehprojektionssysteme zu erkennen. Fig. 2 zeigt ebene Farbdreiecke im CIE-Diagramm. Dargestellt sind die Ordinate 410 und die Abzisse 420, auf denen reduzierte Farbwertanteile x und y aufgetragen sind. Die Kurve 400 umschließt alle visuell erfaßbaren Farbreizwerte (IBK-Dreieck). Die dick eingezeichneten Kreise dienen als Orientierung und gehören zu den Wellenlängen 700 nm, 550 nm und 380 nm.

In das CIE-Diagramm aus Fig. 2 ist ein schraffiertes Farbdreieck 440 mit den Eckpunkten R, G, B eingezeichnet, das den Bereich der Farben darstellt, die mit einem normalen Bildschirm einer Farbbildröhre gemäß der EBU-Norm erzeugt werden können. Die Farbtöne (farbtongleiche oder dominante Wellenlänge) ergeben sich durch die Verbindungsgerade von Weiß nach Normallichtart D65 und den Eckpunkten R, G, B mit dem Spektralfarbenzug, Kurve 400. Die Gerade schneidet diese Kurve bei der entsprechenden Wellenlänge.

Weiter ist in Fig. 2 ein Farbdreieck 450 mit den Eckpunkten R', G', B' für die drei monochromatischen Wellenlängen 620, 545 und 470 nm dargestellt, wie sie in dem Anwendungsbeispiel gemäß Fig. 1 benutzt werden.

Das Farbdreieck 450 mit den Eckpunkten R', G', B' zeigt den Bereich der Farben an, die mit einem derartigen Lasersystem abgebildet werden können. Man erkennt durch den Vergleich der beiden Farbdreiecke 440 und 450 mit den Eckpunkten R, G, B bzw. R', G', B', daß sich diese nicht vollständig überlappen. Der gemeinsame Farbtonbereich ist in diesem Beispiel kleiner als der Farbtonbereich des durch die TV-Primärvalenzen R, G, B wiedergebenden Farb-

EP 0 614 319 B1

dreiecks 440. In der Nähe des Punktes B bleibt ein kleiner Teilbereich von Farbtönen des Farbdreiecks 440 übrig, die durch das Farbdreieck 450 nicht erzeugt werden können. Dieser Teilbereich umfaßt die dunkelblauen Farbtöne und sein Abschneiden stellt für das Auge keine wesentliche Beeinträchtigung der Farbempfindung dar, wie dies weiter oben schon erläutert wurde.

Eine Beeinträchtigung der Farbempfindung wird aber vermieden, wenn man eine blaue Laserlichtquelle verwendet, deren Wellenlänge so gering ist, daß das gesamte Dreieck R, G, B von dem dann gebildeten Dreieck R', G', B' eingeschlossen wird. Dann sind alle Farbtöne des R, G, B Farbdreiecks 440 durch ein Farbdreieck R', G', B' nachbildbar und eine genaue Wiedergabe der aufgenommenen Farben ist möglich, ohne daß man eventuelle Verschiebungen im Blaubereich in Kauf nehmen muß.

Eine derartige Verbesserung im Blaubereich läßt sich durch Verwendung von Lasern der Serie Skylight 400 der Firma COHERENT erreichen, bei denen Laserwellenlängen durch Filter BP 558 und BP 514,5 der Firma Schott, Mainz ausgefiltert wurden. Für Rot wurde ein Kryptonlaser benutzt und für Blau und Grün ein Argonlaser. Damit wurden die Wellenlängen 647,1 nm für Rot, 514,5 nm für Grün und 458 nm für Blau erreicht. Das entsprechende Farbdreieck ist ebenfalls in Fig. 2, jedoch mit unterbrochenen Linien, dargestellt. Es ist erkennbar, daß dieses den Farbtonbereich der EBU-Phosphore R, G, B vollständig umgibt.

In Fig. 3 ist eine Schaltung für eine Steuereinrichtung 20 mit Ausgängen 26, 27 und 28 und Eingängen 21, 22, 23 dargestellt. An den Eingängen 21, 22, 23 liegen die Signale K, L. M an, bei denen es sich um die Farbwertsignale R, G, B oder aber auch um das Luminanzsignal Y und die Farbdifferenzsignale U und V bzw. I und Q entsprechend der verwendeten Fernsehnorm handeln kann. Die Matrixmultiplikation wird in einer Schaltung 80 durchgeführt, deren Eingänge 81, 82 und 83 im gezeigten Ausführungsbeispiel direkt mit den Eingängen 21, 22, 23 der Steuereinrichtung 20 verbunden sind. Die durch die Matrixmultiplikation entstehenden Ausgangssignale werden an den Ausgängen 86, 87, 88 der Schaltung 80 abgegriffen und über Trimmer 150, 250, 350 Ausgangsverstärkern 160, 260, 360 zugeführt, ehe sie an die Ausgänge 26, 27, 28 der Steuereinrichtung 20 als Signale R', G', B' angelegt werden. Die Trimmer 150, 250, 350 sind vorgesehen, um bei der Serienfertigung eines Fernsehprojektionssystems eventuelle Unterschiede der Modulatorkennlinien kompensieren zu können.

Die eigentliche Matrixmultiplikation für die Signale wird durch die Operationsverstärker 140, 240, 340 durchgeführt. Diese sind mit Gegenkopplungswiderständen 100, 200 und 300 vom Ausgang bis zu einem invertierenden Eingang der Operationsverstärker 140, 240, 340 gegengekoppelt. An jedem gegengekoppelten invertierenden Eingang der Operationsverstärker 140, 240, 340 sind jeweils drei weitere Widerstände 110, 120, 130; 210, 220, 230 bzw. 310, 320, 330 angeschlossen. Aufgrund dieser Schaltung arbeitet jeder Operationsverstärker 140, 240, 340 als Summierer, wobei die Eingangssignale an den Widerständen 110, 120, 130; 210, 220, 230 bzw. 310, 320, 330 vor Summierung mit Koeffizienten von Verhältnissen von Widerstandswerten multipliziert werden. Die zahlenmäßigen Widerstandsverhältnisse sind den Absolutwerten der in Tabelle II angegebenen Koeffizienten für die Matrixmultiplikation gleichzusetzen:

Tabelle II:

| | |
|---|---|
| Widerstandswert 100/Widerstandswert 110 = | $/a_{11}/$ |
| Widerstandswert 100/Widerstandswert 120 = | $/a_{12}/$ |
| Widerstandswert 100/Widerstandswert 130 = | $/a_{13}/$ |
| Widerstandswert 200/Widerstandswert 210 = | $/a_{21}/$ |
| Widerstandswert 200/Widerstandswert 220 = | $/a_{22}/$ |
| Widerstandswert 200/Widerstandswert 230 = | $/a_{23}/$ |
| Widerstandswert 300/Widerstandswert 310 = | $/a_{31}/$ |
| Widerstandswert 300/Widerstandswert 320 = | $/a_{32}/$ |
| Widerstandswert 300/Widerstandswert 330 = | $/a_{33}/.$ |

Bei den angegebenen Matrixelementen des Ausführungsbeispiels gemäß Fig. 1 sind jedoch einige Koeffizienten negativ. Deshalb können nicht alle Widerstände 110, 120, 130, 210, 220, 230, 310, 320, 330 direkt an die Eingänge 81, 82, 83 gekoppelt werden. Zur Nachbildung der mathematischen Vorzeichenumkehr sind drei Inverter 145, 245 und 345 vorgesehen, die die Signale an den Eingängen 81, 82, 83 der Schaltung 80 invertieren, bevor sie auf das durch die Widerstände 110, 120, 130, 210, 220, 230, 310, 320 und 330 gebildete Summiernetzwerk gegeben werden. Wie aus Fig. 3 erkennbar ist, sind die Eingänge der Widerstände 110, 120, 130, 210, 220, 230, 310, 320 sowie 330 entsprechend dem Vorzeichen der genannten Matrixelemente mit den Signalen R, G, B an den Eingängen 21, 22, 23 der Steuereinrichtung 20 verbunden. Im Ausführungsbeispiel wurden für die Gegenkopplungswiderstände 100, 200 und 300 gleiche Widerstände von 1 kΩ gewählt. Dementsprechend werden zur Verwirklichung der genannten Matrix gemäß Tabelle Ia die folgenden Widerstände beim Ausführungsbeispiel verwendet:

8

Tabelle III:

| Widerstand | Wert |
|---|---:|
| 110 | 1 kΩ |
| 120 | 8,16 kΩ |
| 130 | 13,74 kΩ |
| 210 | 14,62 kΩ |
| 220 | 1,18 kΩ |
| 230 | 43,67 kΩ |
| 310 | 55,25 kΩ |
| 320 | 9,05 kΩ |
| 330 | 1,07 kΩ. |

Entsprechend lassen sich auch die Widerstände für die der Tabelle Ib zugrundeliegenden Laserwellenlängen berechnen, wobei aber zu beachten ist, daß hier die Eingangssignale nicht zu invertieren sind, da alle Koeffizienten positiv sind.

Die Ausgangssignale der Operationsverstärker 140, 240, 340 werden über Ausgangswiderstände 142, 242 und 342 an die Ausgänge 86, 87, 88 der Schaltung 80 angelegt. Die Ausgangswiderstände 142, 242, 342 sind im gezeigten Ausführungsbeispiel 51Ω, passend zu einem 50Ω-Videosystem. Außerdem ist an jedem Ausgang eine Diode 144, 244, 344 gegenüber einem Potential von 0,7 Volt geschaltet. Diese Dioden 144, 244, 344 unterdrücken eventuelle Ausgangsspannungen der Operationsverstärker mit unerwünschter Polarität (hier positiv). Um auch kleine Potentiale unterhalb der Schwellspannung der Dioden 144, 244, 344 unterdrücken zu können, sind die Dioden 144, 244, 344 gegen ein Potential von -0,7 Volt geschaltet. Bei den Dioden 144, 244, 344 handelt es sich in diesem Beispiel um Siliziumdioden, deren Schwellspannung gerade der 0,7 Volt Vorspannung entspricht. Bei anderen Dioden ist ein entsprechendes Potential zu wählen. Beispielsweise wird man bei Germaniumdioden ungefähr 0,2 V statt 0,7 V als Gegenpotential wählen.

Dioden haben im allgemeinen eine exponentielle I/U-Kennlinie, so daß sich bei kleinen Signalen an der Diode ein Spannungsabfall ergibt, der logarithmisch mit der Ausgangsspannung des jeweiligen Operationsverstärkers verläuft. Bei geeigneter Auswahl der Dioden 150, 250, 350, der Vorwiderstände 141, 142, 342 und des Potentials läßt sich also erreichen, daß der Spannungsabfall logarithmisch asymptotisch bei Ausgangsspannungen unerwünschter Polarität gegen Null geht. Solche unerwünschten Polaritäten treten dann auf, wenn sich der transformierte Farbton nicht im gemeinsamen Farbtonbereich befindet. Ein logarithmisches Abschneiden hat gegenüber dem von LANG vorgeschlagenen Verfahren (vgl. Beschreibungseinleitung), bei dem exakt bei Null abgeschnitten wird, den Vorteil, daß auch Farbtonänderungen außerhalb des gemeinsamen Farbtonbereichs dargestellt werden, Kontraste also noch erkennbar bleiben.

Zum Festlegen des asymptotischen Verhaltens muß das Potential gleich der Schwellspannung der Dioden 150, 250, 350 gewählt werden. Die Größe der Vorwiderstände 142, 242, 342 bestimmt den logarithmischen Verlauf in Abhängigkeit von der Eingangsspannung. Wenn die Widerstände 142, 242, 342 sehr niederohmig gewählt werden, wie in diesem Beispiel 51Ω, setzt der logarithmische Verlauf des Spannungsabfalls in Abhängigkeit von der Ausgangsspannung des jeweiligen Operationsverstärkers 140, 240, 340 erst bei sehr kleinen Spannungen ein, so daß die Transformation der Farbtöne praktisch bis an die Grenzen des gemeinsamen Farbtonbereichs die durch die Phosphore darstellbaren nagetreuen Farbtöne ergibt.

Die Steuereinrichtung 20 kann man statt mit den beispielhaft genannten R, G, B Signalen auch mit anderen Signalen, wie beispielsweise dem Luminanzsignal Y und den Farbdifferenzsignalen U, V bzw. I, Q, betreiben. Dann würde sich aber die Matrix ändern und zwar nicht nur die Größe der Koeffizienten, sondern auch deren einzelne Vorzeichen. Das bedeutet, die Widerstände 110, 120, 130, 210, 220, 230, 310, 320, 330 sind entsprechend unterschiedlich zu wählen und verschieden von Fig. 3 an die Eingänge bzw. Ausgänge der Inverter 144, 245 bzw. 345 anzuschließen.

Für eine einfache Änderung der Schaltung 80 sind im Ausführungsbeispiel die die Koeffizienten bestimmenden Widerstände 110, 120, 130, 210, 220, 230, 310, 320, 330 in einer gesonderten Baugruppe 90 enthalten, die über Steckkontakte 91, 92, 93, 94, 95, 96, 97, 98, 99 in die Schaltung 80 einsetzbar ist. Dabei sind die Steckkontakte 97, 98, 99 Ausgänge der Baugruppe 90, die direkt an die gegengekoppelten Eingänge der Operationsverstärker 140, 240, 340 angeschlossen werden. Die Steckkontakte 91, 92, 93 sind zur Eingabe der Signale von den Eingängen 81, 82, 83 der Schaltung 80 vorgesehen, während die Eingänge 94, 95, 96 die entsprechenden invertierenden Signale in die Baugruppe 90 führen. Die Baugruppe 90 kann dadurch mit unterschiedlichen Widerständen für verschiedene Koeffizienten bestückt werden und entsprechend den Vorzeichen der Koeffizienten für die Matrixmultiplikation unterschiedlich an die Eingänge 91, 92, 93, 94, 95, 96 angeschlossen werden. Die Baugruppe 90 ist dadurch für unterschiedliche Anwendungen austauschbar. So ist es leicht möglich, Verschiebungen der Farbwertanteile der drei optischen Kanäle zu korrigieren. Solche Verschiebungen entstehen durch die selektiven Transmissionseigenschaften der optischen Bauteile, die den Lasern nachgeordnet sind, oder durch andere Laser.

Im Rahmen einer Standardisierung läßt sich die Baugruppe 90 als integrierter Schaltkreis ausführen. Insbesondere bietet sich eine Ausführung in Dickfilmtechnik an, da mit Hilfe dieser Technik auch eine genügend hohe Genauigkeit für die Widerstandswerte erzielt werden kann.

In den vorstehend beschriebenen Ausführungsbeispielen wurden zwei Argonmischgaslaser und ein Kryptonmischgaslaser mit Filtern oder Farbstofflasern zur Einstellung der gewünschten Wellenlängen benutzt, die durch drei Lichtsignale $R_L'$, $G_L'$, $B_L'$ erzeugt werden. Die Intensität von Argon- oder Kryptonmischgaslasern läßt sich aber nicht schnell genug direkt steuern, um ein Fernsehbild zu erzeugen, weswegen solche Laserlichtquellen 32, 42, 52 üblicherweise im Dauerstrich betrieben werden und die Intensität separat mit Modulatoren 43, 44, 54 gesteuert wird. Es ist aber zu erwarten, daß bald auch Halbleiterlaser zur Verfügung stehen, die entsprechende, auswählbare Wellenlängen haben, so daß man ein Laserprojektionssystem auch mit diesen verwirklichen kann. Derartige Halbleiterlaser könnten dann direkt angesteuert werden.

Die einsetzbaren Lichtquellen beschränken sich aber nicht auf Laser, es können vielmehr prinzipiell alle Lichtquellen, die entsprechend gut fokussierbar und für ein Fernsehbild rasterbar sind, verwendet werden. Es können sogar beliebige, entsprechend der Lehre des Anspruchs 1, über ihre Wellenlängen ein entsprechend großes Farbdreieck gemäß der technischen Lehre des Anspruchs 1 aufspannende Lichtquellen verwendet werden, deren Ansteuersignale so kombiniert werden, daß eine farbgetreue Wiedergabe gewährleistet ist.

Es ist denkbar, daß man zur Erhöhung der Farbqualität auch vier oder mehr Laser verwenden wird. Auch die dann benötigten zusätzlichen Signale können mit einer Steuereinrichtung 20 entsprechend einer Matrixmultiplikation erzeugt werden. Die Schaltung 80 kann durch zusätzliche Operationsverstärker und Eingangswiderstände für die zusätzlichen Signale analog zum Beispiel gemäß Fig. 3 modifiziert werden.

**Patentansprüche**

1. Verfahren zur Erzeugung von farbigen Bildpunkten (74) eines Fernsehbildes, die mit Lichtsignalen ($R_L'$, $G_L'$, $B_L'$) unterschiedlicher Wellenlängen beleuchtet werden und deren Farbtöne durch Farbwertsignale (R, G, B) in einem ersten Basissystem festgelegt sind, das durch über Wellenlängen von Bildschirmphosphoren definierte Eckpunkte eines Farbtonbereichs (440) in einem CIE-Diagramm darstellbar ist, wobei durch die Wellenlängen der Lichtsignale ($R_L'$, $G_L'$, $B_L'$) ein vom ersten verschiedenes, zweites Basissystem aufgespannt wird, das einen mit dem ersten Basissystem gemeinsamen Farbtonbereich aufweist und Lichtsignale ($R_L'$, $G_L'$, $B_L'$) aus mindestens drei Signalen (K, L, M) erzeugt werden, welche die Farbwertsignale (R, G, B) im ersten Basissystem sind oder diese enthalten, indem über eine Matrix vom ersten Basissystem in das zweite transformiert wird, wobei die Wellenlängen der Lichtsignale ($R_L'$, $G_L'$, $B_L'$) so festgelegt werden, daß die kürzeste 470 nm oder kleiner ist und der gemeinsame Farbtonbereich mindestens diejenigen Eckpunkte des Farbtonbereichs (440) des ersten Basissystems enthält, deren Wellenlänge größer als die kürzeste durch Bildschirmphosphore bestimmte Wellenlänge ist, und daß jeder durch die Matrixtransformation erzeugte Farbton innerhalb des gemeinsamen Farbtonbereichs im zweiten Basissystems gleich dem durch die Farbwertsignale im ersten Basissystem festgelegten Farbton ist.

2. Verfahren nach Anspruch 1, dadurch gekennzeichnet, daß für aus der Matrixtransformation sich ergebende negative Intensitäten für Farbsignale von Farbtönen außerhalb des gemeinsamen Farbtonbereichs Lichtsignale mit einer Intensität erzeugt werden, die aus der jeweiligen negativen Intensität über eine logarithmisch asymptotisch auf Null gehende Funktion gewonnen wird.

3. Fernsehprojektionssystem, insbesondere zur Durchfürung des Verfahrens nach Anspruch 1 oder 2, zur Erzeugung von farbigen Bildpunkten (74) eines Fernsehbildes mit mindestens drei intensitätsmäßig steuerbaren Lichtquellen (30, 40, 50) für Lichtsignale ($R_L'$, $G_L'$, $B_L'$) unterschiedlicher Wellenlänge, wobei der Farbton jedes Bildpunktes (74) durch Farbwertsignale (R, G, B) in einem ersten Basissystem festgelegt ist, das durch über Wellenlängen von Bildschirmphosphoren definierte Eckpunkte eines Farbtonbereichs (440) in einem CIE-Diagramm darstellbar ist, und die Wellenlängen der Lichtsignale ($R_L'$, $G_L'$, $B_L'$) ein vom ersten verschiedenes, zweites Basissystem bestimmen, das einen mit dem ersten Basissystem gemeinsamen Farbtonbereich aufweist, mit einer Eingangsschaltung (10) zur Erzeugung mindestens dreier elektrischer Signale (K, L, M), die den Farbwertsignalen proportional sind oder diese in einer Mischung enthalten, und ferner mit einer Steuereinrichtung (20) zur Steuerung der Lichtquellen (30, 40, 50), die von den Signalen (K, L, M) der Eingangsschaltung (10) ansteuerbar ist, wobei die Steuereinrichtung (20) eine Schaltung (80) aufweist, mit der jeder Farbton vom ersten auf das zweite Basissystem über eine Matrix transformierbar ist, wobei die kürzeste Wellenlänge der Lichtquellen (30, 40, 50) 470 nm oder kleiner ist, deren andere Wellenlängen so festgelegt sind, daß der gemeinsame Farbtonbereich mindestens diejenigen Eckpunkte des Farbtonbereichs (440) des ersten Basissystems enthält, deren Wellenlänge größer als die kürzeste durch Bildschirmphosphore bestimmte Wellenlänge ist, und daß die Schaltung (80) so ausgelegt ist, daß der Farbton eines Bildpunkts (74) innerhalb des gemeinsamen Farbtonbereiches gleich dem durch die Farbwertsignale festgelegten Farbton ist.

4. Fernsehprojektionssystem nach Anspruch 3, dadurch gekennzeichnet, daß die elektrischen Signale der Eingangsschaltung (10) ein der Summe der drei Farbwertsignale proportionales Luminanzsignal (Y) und zwei verschiedene, Farbdifferenzsignalen (U, V; I, Q) proportionale Signale umfassen.

5. Fernsehprojektionssystem nach Anspruch 3 oder 4, dadurch gekennzeichnet, daß die Schaltung (80) in der Steuereinrichtung (20) ein die Matrixtransformation bestimmendes Netzwerk (90) aus Widerständen (110, 120, 130, 210, 220, 230, 310, 320, 330) enthält.

6. Fernsehprojektionssystem nach einem der Ansprüche 3 bis 5, dadurch gekennzeichnet, daß die Schaltung (80) in der Steuereinrichtung (20) für jedes ihrer Ausgangssignale einen Operationsverstärker (140, 240, 340) vorsieht, mit dem aus elektrischen Signalen (K, L, M) erzeugte, durch über die Koeffizienten der Matrix bestimmte Eingangswiderstände (110, 120, 130, 210, 220, 230, 310, 320, 330) fließende Ströme summierbar sind.

7. Fernsehprojektionssystem nach Anspruch 6, dadurch gekennzeichnet, daß die die Koeffizienten der Matrix bestimmenden Eingangswiderstände (110, 120, 130, 210, 220, 230, 310, 320, 330) austauschbar in der Schaltung (80) der Steuereinrichtung (20) angeordnet sind.

8. Fernsehprojektionssystem nach einem der Ansprüche 3 bis 7, dadurch gekennzeichnet, daß die Lichtquellen (30, 40, 50) Laser (32, 42, 52) mit Lichtmodulatoren (34, 44, 54) sind, wobei die Lichtintensität der Lichtquellen (30, 40, 50) durch elektrische Ansteuerung der Lichtmodulatoren veränderbar ist.

9. Fernsehprojektionssystem nach einem der Ansprüche 3 bis 7, dadurch gekennzeichnet, daß die Lichtquellen (34, 44, 54) Halbleiterlaser oder LED's sind.

## Claims

1. A method of generating coloured pixels (74) of a television picture, which are illuminated by light signals ($R_L'$, $G_L'$, $B_L'$) of different wavelengths and have hues determined by means of colour value signals (R, G, B) in a first base system which can be represented in a CIE diagram by comer points of a hue area (440) as defined by screen phosphor wavelengths, wherein the wavelengths of the light signals ($R_L'$, $G_L'$, $B_L'$) determine a second base system different from the first one which comprises a hue area in common with the first base system and wherein light signals ($R_L'$, $G_L'$, $B_L'$) are generated from at least three signals (K, L, M) which are or contain the colour value signals (R, G, B) in the first base system, by a transformation from the first to the second base system effected via a matrix, wherein the wavelengths of the light signals ($R_L'$, $G_L'$, $B_L'$) are so determined that the shortest is 470 nm or less and the common hue area contains at least those comer points of the hue area (440) of the first base system whose wavelength is greater than the shortest wavelength determined by screen phosphors, and that every hue generated by the matrix transformation within the common range of hues in the second base system is identical with the hue determined by the colour value signals in the first base system.

2. A method according to claim 1, characterised in that for negative intensities, resulting from the matrix transformation, of colour signals for hues outside the common hue area, light signals are generated at an intensity obtained from the respective negative intensity by means of a function which approaches zero logarithmically and asymptotically.

3. A TV projection system, in particular for carrying out the method according to claim 1 or 2, for generating coloured pixels (74) of a television picture with at least three intensity-controllable light sources (30, 40, 50) for light signals ($R_L'$, $G_L'$, $B_L'$) of different wavelengths, wherein the hue of each pixel (74) is determined by colour value signals (R, G, B) in a first base system which can be represented in a CIE diagram by comer points of a hue area (440) as defined by screen phosphor wavelengths, and wherein the wavelengths of the light signals ($R_L'$, $G_L'$, $B_L'$) determine a second base system different from the first one and comprise a hue area in common with the first base system, with an input circuit (10) for generating at least three electric signals (K, L, M) which are proportional to the colour value signals or contain them in a mixture, and further with a control device (20) for controlling the light sources (30, 40, 50) adapted to be controlled by the signals (K, L, M) from the input circuit (10), the control device (20) comprising a circuit (80) which can transform each hue from the first into the second base system via a matrix, wherein the shortest wavelength of the light sources (30, 40, 50) is 470 nm or less and their other wavelengths are determined in such a way that the common hue area contains at least those corner points of the hue area (440) of the first base system whose wavelength is greater than the shortest wavelength determined by screen phosphors, and the circuit (80) is so designed that the hue of a pixel (74) within the common range of hues is identical with the hue determined by the colour value signals.

4. A TV projection system according to claim 3, characterised in that the electric signals from the input circuit (10) comprise a luminance signal (Y) proportional to the sum of the three colour value signals and two different signals proportional to colour difference signals (U, V; I, Q).

5. A TV projection system according to claim 3 or 4, characterised in that the circuit (80) in the control device (20) contains a network (90) of resistors (110, 120, 130, 210, 220, 230, 310, 320, 330) which determines the matrix transformation.

6. A TV projection system according to any of claims 3 to 5, characterised in that for each of its output signals, the circuit (80) in the control device (20) comprises an operational amplifier (140, 240, 340) adapted to sum the currents generated by electric signals (K, L, M) and flowing through input resistors (110, 120, 130, 210, 220, 230, 310, 320, 330) determined by the coefficients of the matrix.

7. A TV projection system according to claim 6, characterised in that the input resistors (110, 120, 130, 210, 220, 230, 310, 320, 330) determining the coefficients of the matrix are exchangeably arranged in the circuit (80) of the control device (20).

8. A TV projection system according to any of claims 3 to 7, characterised in that the light sources (30, 40, 50) are lasers (32, 34, 52) with light modulators (34, 44, 54), the intensity of the light sources (30, 40, 50) being variable by electric control of the light modulators.

9. A TV projection system according to any of claims 3 to 7, characterised in that the light sources (34, 44, 54) are semiconductor lasers or LEDs.

**Revendications**

1. Procédé de production de points d'image (74) en couleur d'une image de télévision, qui sont éclairés avec des signaux lumineux ($R_L'$, $V_L'$, $B_L'$) de différentes longueurs d'onde et dont les nuances de couleur sont fixées par des signaux de valeur de couleur (R, V, B) dans un premier système de base, qui peut être représenté par des points d'angle, définis par des longueurs d'onde de phosphores d'écran, d'un domaine de nuances de couleur (440) dans un diagramme CIE, dans lequel un deuxième système de base, différent du premier, qui présente un domaine de nuances de couleur commun avec le premier système de base, est défini par les longueurs d'onde des signaux lumineux ($R_L'$, $V_L'$, $B_L'$), et des signaux lumineux ($R_L'$, $V_L'$, $B_L'$) sont produits à partir d'au moins trois signaux (K, L, M), qui sont les signaux de valeur de couleur (R, V, B) dans le premier système de base ou contiennent ceux-ci, et dans lequel, par l'intermédiaire d'une matrice il est transformé du premier système de base dans le deuxième, dans lequel les longueurs d'onde des signaux lumineux ($R_L'$, $V_L'$, $B_L'$) sont définis de manière que la plus courte est de 470 nm ou inférieure et le domaine de nuances de couleurs commun contient au moins les points d'angle du domaine de nuances de couleur (440) du premier système de base, dont la longueur d'onde est supérieure à la plus courte longueur d'onde, déterminée par des luminophores d'écran, et dans lequel chaque nuance de couleur, produite par la transformation de matrice à l'intérieur du domaine de nuances de couleur commun, dans le deuxième système de base, est égale à la nuance de couleur définie par les signaux de valeur de couleur dans le premier système de base.

2. Procédé selon la revendication 1, caractérisé en ce que pour des intensités négatives, résultant de la transformation de matrice, pour des signaux de couleur de nuances de couleur à l'extérieur du domaine de nuances de couleur commun, sont produits des signaux lumineux avec une intensité qui est obtenue à partir de l'intensité négative respective, par l'intermédiaire d'une fonction logarithmiquement asymptotique, tendant vers zéro.

3. Système de projection de télévision, en particulier pour la mise en oeuvre du procédé selon la revendication 1 ou 2, pour la production de points d'image (74) en couleur d'une image de télévision avec au moins trois sources lumineuses (30, 40, 50), commandables en intensité, pour des signaux lumineux ($R_L'$, $G_L'$, $B_L'$) de longueur d'onde différente, dans lequel la nuance de couleur de chaque point d'image (74) est définie par des signaux de valeur de couleur (R, V, B) dans un premier système de base, qui peut être représenté dans un diagramme CIE, par des points d'angle, définis par des longueurs d'onde de phosphores d'écran, d'un domaine de nuances de couleur (440), et les longueurs d'onde des signaux lumineux ($R_L'$, $V_L'$, $B_L'$) déterminent un deuxième système de base, différent du premier, qui présente un domaine de nuances de couleur commun avec le premier système de base, avec un circuit d'entrée (10) pour la production d'au moins trois signaux électriques (K, L, M), qui sont proportionnels aux signaux de valeur de couleur ou contiennent ceux-ci dans un mélange, et en outre avec un dispositif de commande (20) pour la commande des sources lumineuses (30, 40, 50), qui peut être commandé par les signaux (K, L, M) du circuit d'entrée (10), dans lequel le dispositif de commande (20) présente un circuit (80), avec lequel chaque nuance de couleur peut être transformée par une matrice, du premier système de base au deuxième système de base, la plus courte longueur d'onde des sources lumineuses (30, 40, 50) est de 470 nm ou inférieure, leurs autres longueurs d'onde sont définies de manière que le domaine de nuances de couleur commun contient au moins les points d'angle du domaine de nuances de couleur (440) du premier système de base, dont la longueur d'onde est supérieure à la plus courte longueur d'onde déterminée par des phosphores d'écran, et dans lequel le circuit (80) est conçu de manière que la nuance de couleur d'un point d'image (74) à l'intérieur du domaine de nuances de couleur commun soit égale à la nuance de couleur définie par les signaux de valeur de couleur.

4. Système de projection de télévision selon la revendication 3, caractérisé en ce que les signaux électriques du circuit d'entrée (10) comprennent un signal de luminance (Y), proportionnel à la somme des trois signaux de valeur de couleur et deux signaux différents, proportionnels à des signaux de différence de couleur (U, V ; I, Q).

5. Système de projection de télévision selon la revendication 3 ou 4, caractérisé en ce que le circuit (80) contient dans le dispositif de commande (20), un réseau (90), déterminant la transformation de matrice, fait de résistances (110, 120, 130, 210, 220, 230, 310, 320, 330).

6. Système de projection de télévision selon l'une des revendications 3 à 5, caractérisé en ce que le circuit (80) dans le dispositif de commande (20) prévoit pour chacun de ses signaux de sortie, un amplificateur opérationnel (140, 240, 340), avec lequel des courants s'écoulant, produits à partir de signaux électriques (K, L, M), peuvent être additionnés par des résistances d'entrée (110, 120, 130, 210, 220, 230, 310, 320, 330), déterminées par l'intermédiaire des coefficients de la matrice.

7. Système de projection de télévision selon la revendication 6, caractérisé en ce que les résistances d'entrée (110, 120, 130, 210, 220, 230, 310, 320, 330), déterminant les coefficients de la matrice, sont disposées interchangeables dans le circuit (80) du dispositif de commande (20).

8. Système de projection de télévision selon l'une des revendications 3 à 7, caractérisé en ce que les sources lumineuses (30, 40, 50) sont des lasers (32, 42, 52) avec des modulateurs de lumière (34, 44, 54), l'intensité lumineuse des sources lumineuses (30, 40, 50) pouvant être modifiée par commande électrique des modulateurs de lumière.

9. Système de projection de télévision selon l'une des revendications 3 à 7, caractérisé en ce que les sources lumineuses (34, 44, 54) sont des lasers à semiconducteurs ou des LED.

Fig.1

Fig.2

Fig.3

EP 0 614 319 B1